# FASCICULE DE BREVET EUROPEEN

(11) **EP 1 800 933 B1**
(45) Date de publication et mention de la délivrance du brevet: **21.05.2008**
(21) Numéro de dépôt: 06301174.6
(22) Date de dépôt: 24.11.2006
(51) Int. Cl.: B60K 37/00, B62D 1/16

(54) **Sous-ensemble de poste de pilotage pour véhicule automobile avec colonne de direction et dispositif de visualisation d'informations associé**
Kraftfahrzeugcockpit mit Lenksäule und zugehörige Anzeigevorrichtung zur Darstellung von Informationen
Cockpit for motor vehicle with steering column and associated device for displaying informations

(30) Priorité: 22.12.2005 FR 0553991
(43) Date de publication de la demande: 27.06.2007
(73) Titulaire: Renault S.A.S., 92100 Boulogne-Billancourt (FR)
(72) Inventeur: Le, Leizour, Alban, 78580, MAULE (FR); Marceau, Thierry, 92500, RUEIL-MALMAISON (FR); Prenel, Frèdèric, 78830, BULLION (FR)

(56) Documents cités:
- EP-A- 1 502 820
- WO-A-97/04978
- WO-A-03/047943
- US-A- 2 804 931

## Description

### DOMAINE TECHNIQUE

La présente invention concerne un sous-ensemble de poste de pilotage destiné à un véhicule automobile. L'invention se rapporte à un tel sous-ensemble avec une colonne de direction, comprenant un dispositif permettant aux utilisateurs du véhicule, et notamment au conducteur de visualiser des informations.

Dans un véhicule automobile, un poste de pilotage comprend une planche de bord et un sous-ensemble de direction avec son volant. La planche de bord désigne l'ensemble, qui s'étend d'un côté à l'autre à l'avant de l'habitacle du véhicule entre le pare-brise avant et les sièges avant. De manière connue, la planche de bord loge des éléments d'interface entre le véhicule et ses utilisateurs. Ces éléments d'interfaces sont des dispositifs de visualisation d'informations, des éléments de confort, des organes de sélection du mode de fonctionnement d'un ou plusieurs composants du véhicule et des volumes de rangement.

En général, de tels éléments d'interface, sont logés dans la planche de bord de manière à se trouver à la portée, visuelle ou tactile, des utilisateurs assis sur les sièges avant, conducteur et/ou passager. En effet, ces utilisateurs doivent pouvoir agir sans difficulté sur ces actionneurs et bénéficier facilement des informations et/ou du confort procuré par ces éléments. Pour cela, de tels éléments d'interface sont donc généralement logés dans la partie supérieure de la planche de bord, c'est-à-dire la partie la plus éloignée du plancher de l'habitacle.

Les éléments d'interface sont cependant de plus en plus positionnés sur le sous-ensemble de direction et/ou sur le volant de direction. Ils sont ainsi directement visibles et/ou accessibles par le conducteur. Ainsi, les organes de sélection, appelés également commodo, tels que manettes de commande des essuie-vitres, manettes de commande des indicateurs de changement de direction, interrupteur d'avertisseur sonore, molette pour un régulateur de vitesse du véhicule, et d'autres encore, sont placés de part et d'autre du sous-ensemble de direction. Des interrupteurs permettant de piloter l'autoradio ou le dispositif de navigation par satellite, et d'autres encore, sont disposés sur la face avant du volant de direction.

Les dispositifs de visualisation informent les utilisateurs du fonctionnement correct du véhicule dans lequel ils sont installés. Différents types de dispositifs de visualisation existent, tels qu'un indicateur de la vitesse du véhicule, un indicateur du régime moteur ou compte-tours, un indicateur de jauges de niveau de l'un des fluides nécessaires au fonctionnement du véhicule, un compteur kilométrique, un écran de navigation par satellite, un indicateur du niveau de charge de l'accumulateur électrique, différents voyants lumineux, et d'autres encore.

De manière connue, ces dispositifs de visualisation sont le plus souvent insérés dans une excroissance du tableau de bord située face au conducteur, devant le volant de direction. Le volant peut cacher une partie du dispositif de visualisation, en fonction de son positionnement lors de son réglage en hauteur et/ou en profondeur.

### ÉTAT DE LA TECHNIQUE ANTÉRIEURE

De ce fait, dans certains véhicules, tels que le modèle Modus®, commercialisé par la Demanderesse, la totalité des dispositifs de visualisation a été transférée en zone centrale de la planche de bord.

Une autre solution selon le préambule de la revendication 1, connue d'après le document EP- 0.837.783, ainsi que d'après le modèle 107®, commercialisé par la société PSA, est d'intégrer un dispositif de visualisation sur une coquille d'habillage du sous-ensemble de direction. La face supérieure de l'enveloppe extérieure du sous-ensemble de direction forme un bombement en arc de cercle se déployant sur la largeur du sous-ensemble de direction. Le dispositif de visualisation est encastré sous le bombement. Cependant, un tel capotage de l'enveloppe extérieure induit un défaut de visibilité du dispositif de visualisation. En effet, dans certaines positions angulaires du volant de direction, le moyeu central du volant, intégrant un dispositif de protection à coussin d'air, vient se placer devant le dispositif de visualisation.

On connaît également, d'après le modèle Mini Cooper®, commercialisé par la société BMW, un dispositif de visualisation monté sur la face supérieure de l'enveloppe d'habillage du sous-ensemble de direction. Le dispositif de visualisation est inclus dans un boîtier qui comporte une semelle plaquée par une vis de fixation sur la face supérieure de l'enveloppe. La vis est placée au sommet de la semelle, à l'avant du boîtier du dispositif de visualisation.

Cependant, un tel moyen de fixation va soumettre l'ensemble du dispositif de visualisation, avec son boîtier, son mécanisme et sa connectique, à des vibrations provenant de la planche de bord et se transmettant à l'enveloppe d'habillage du sous-ensemble.

Le document JP- 61.102.338 présente un sous-ensemble comprenant une colonne de direction avec un arbre, un volant et un habillage pour sous-ensemble de direction. Un tableau d'instrumentation est fixé sur la colonne de direction. L'habillage intègre le tableau d'instrumentation réglable en hauteur avec le volant de direction.

De nombreuses pièces d'habillage sont nécessaires pour assurer une finition correcte et pour qu'un utilisateur ne voit pas des espacements trop grands entre le tableau d'instrumentation, le volant et la planche de bord. Cet habillage pour l'instrumentation s'avère complexe et onéreux.

### EXPOSÉ DE L'INVENTION

Un problème principal que se propose de résoudre l'invention consiste à mettre au point un sous-ensemble de poste de pilotage pour un véhicule automobile comprenant un dispositif de visualisation. Un deuxième problème est celui de placer un dispositif de visualisation sur une enveloppe extérieure d'habillage de la colonne de direction, en prévoyant un montage réalisable de manière fiable et peu coûteuse. Un troisième problème est de conférer à l'habitacle, à la planche de bord et au sous-ensemble de poste de pilotage un aspect esthétique acceptable. Un autre problème encore est de positionner et d'assurer une solidarisation d'un dispositif de visualisation au niveau d'un sous-ensemble de direction.

L'invention concerne donc un sous-ensemble pour véhicule automobile, comprenant :
- un arbre de direction, à l'extrémité duquel est solidarisé un volant de direction,
- une structure de colonne de direction pour l'arbre de direction,
- une enveloppe extérieure, une ouverture étant ménagée dans une face supérieure de l'enveloppe extérieure, et
- au moins un dispositif de visualisation, destiné à l'information des utilisateurs du véhicule, présentant un boîtier solidarisé au dessus de l'ouverture.

Conformément à la présente invention, le sous-ensemble est caractérisé en ce qu'il présente un écartement formant un jeu, ménagé entre un bord arrière du boîtier du dispositif de visualisation et un rebord arrière de l'ouverture, le bord arrière du boîtier étant situé en dessous et à l'arrière du rebord arrière de l'ouverture, de façon à ce que le boîtier dissimule l'ouverture.

Autrement dit, le boîtier vient chapeauter l'ouverture pour le dispositif de visualisation, qui est ménagée dans l'habillage extérieur du sous-ensemble. L'ouverture nécessaire au dispositif de visualisation d'information est dissimulée à la vue des utilisateurs présents dans le véhicule, par exemple en étant assis sur le siège du conducteur et le siège du passager avant. En raison du jeu prévu, le dispositif de visualisation devient indépendant de l'enveloppe extérieure d'habillage du sous-ensemble de colonne de direction. Le dispositif de visualisation n'est plus soumis aux vibrations se répercutant sur la planche de bord et sur l'enveloppe extérieure d'habillage de la colonne.

Avec le choix de prévoir un jeu, il n'y a pas besoin de plaquer le boîtier sur la coquille formant l'enveloppe extérieure. Le jeu au montage ne pose aucune difficulté quant à la finition. Le sous-ensemble obtenu avec le dispositif de visualisation est simple et économique. Seul un nombre réduit de pièces est nécessaire pour la mise en oeuvre de l'invention.

Le dispositif de visualisation est solidarisé à la structure de colonne de direction par des moyens de fixation passant par l'ouverture. En prévoyant un moyen de fixation spécifique, le dispositif de visualisation est plus profondément ancré dans la partie apte à le supporter. Les moyens de fixation peuvent comprendre une patte de fixation sensiblement coudée à angle droit. La patte de fixation peut venir en appui contre la structure interne de la colonne, qui est formée par la structure de colonne de direction de l'arbre de direction. Le dispositif de visualisation dépend mécaniquement de l'armature interne de la colonne et de ses parties constitutives.

Afin d'assurer une fixation ferme, les moyens de fixation peuvent s'étendre à l'intérieur du boîtier du dispositif de visualisation. Les moyens de fixation peuvent avantageusement entrer en contact avec une face avant du boîtier du dispositif de visualisation.

De manière particulièrement favorable, un écartement formant un jeu peut être constitué entre un organe interne du dispositif de visualisation et le rebord arrière de l'ouverture, au niveau de la face supérieure de l'enveloppe extérieure d'habillage. Cet écartement permet de gérer des dispersions dimensionnelles intervenant lors du montage.

De manière particulièrement avantageuse, la colonne peut comprendre un cache, venant fermer une zone avant de l'ouverture, qui est ménagée dans la face supérieure de l'enveloppe extérieure d'habillage. Le cache formant un obturateur vient fermer l'ouverture prévue. Pour obtenir une esthétique correcte, la zone avant de l'ouverture ménagée dans la face supérieure de l'enveloppe extérieure d'habillage et le cache peuvent être prévus entre un bord avant du boîtier du dispositif de visualisation et un rebord avant de l'ouverture ménagée dans la face supérieure de l'enveloppe extérieure d'habillage. Le cache sert également à dissimuler notamment le dispositif d'accès aux moyens de fixation.

La face supérieure de l'enveloppe extérieure d'habillage peut préférentiellement comprendre deux flancs latéraux. Ces deux flancs latéraux peuvent être situés de part et d'autre de l'ouverture ménagée dans la face supérieure de l'enveloppe extérieure d'habillage et peuvent remonter en direction du boîtier du dispositif de visualisation.

Selon un mode réalisation particulièrement intéressant, le dispositif de visualisation peut être un compte-tour.

### BRÈVE DESCRIPTION DES DESSINS

L'invention sera bien comprise et ses divers avantages et différentes caractéristiques ressortiront mieux lors de la description suivante, de l'exemple non limitatif de réalisation, en référence aux dessins schématiques annexés, dans lesquels :
- la Figure 1 représente une vue du dessus en perspective d'une planche de bord et d'un sous-ensemble de poste de pilotage équipé avec un dispositif de visualisation selon l'invention ;
- la Figure 2 représente une vue latérale partielle en perspective de la planche de bord et du sous-ensemble selon la Figure 1 ;

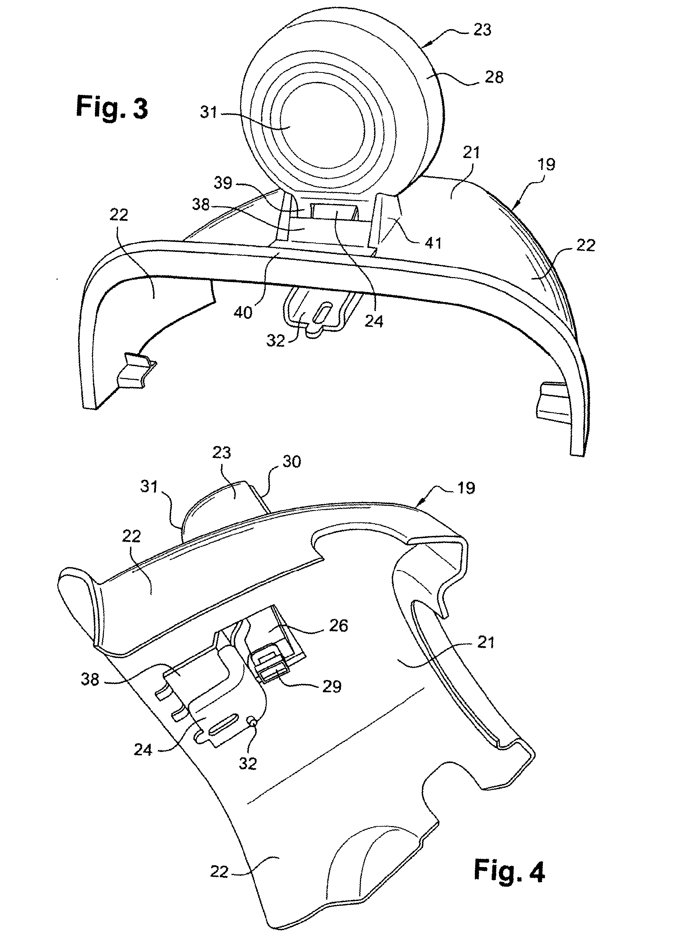

- la Figure 3 représente une vue arrière en perspective de l'enveloppe extérieure et du dispositif de visualisation ;
- la Figure 4 représente une vue du dessous en perspective de l'enveloppe extérieure et du dispositif de visualisation ; et

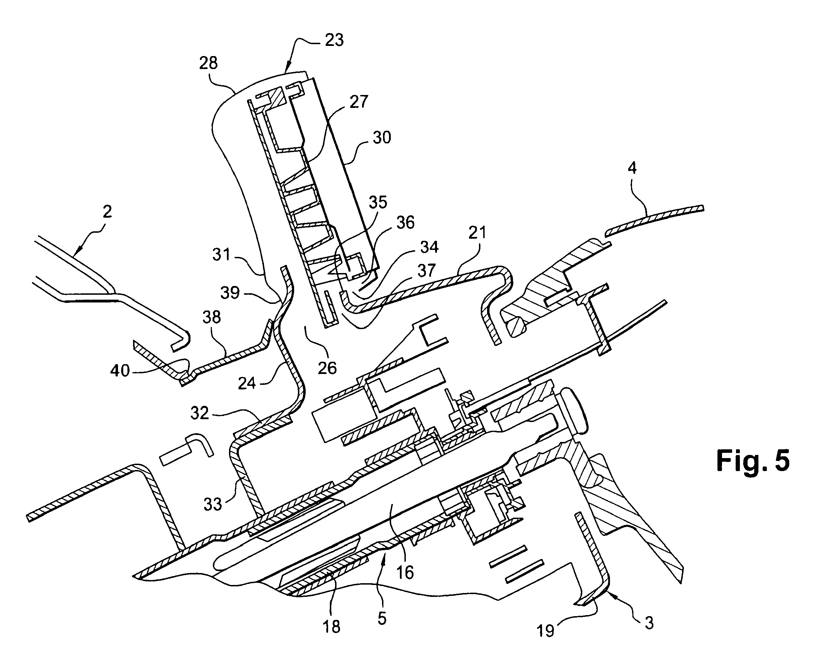

- la Figure 5 représente une vue en section longitudinale partielle du sous-ensemble de direction.

### EXPOSÉ DÉTAILLÉ DE MODES DE RÉALISATION PRÉFÉRÉS

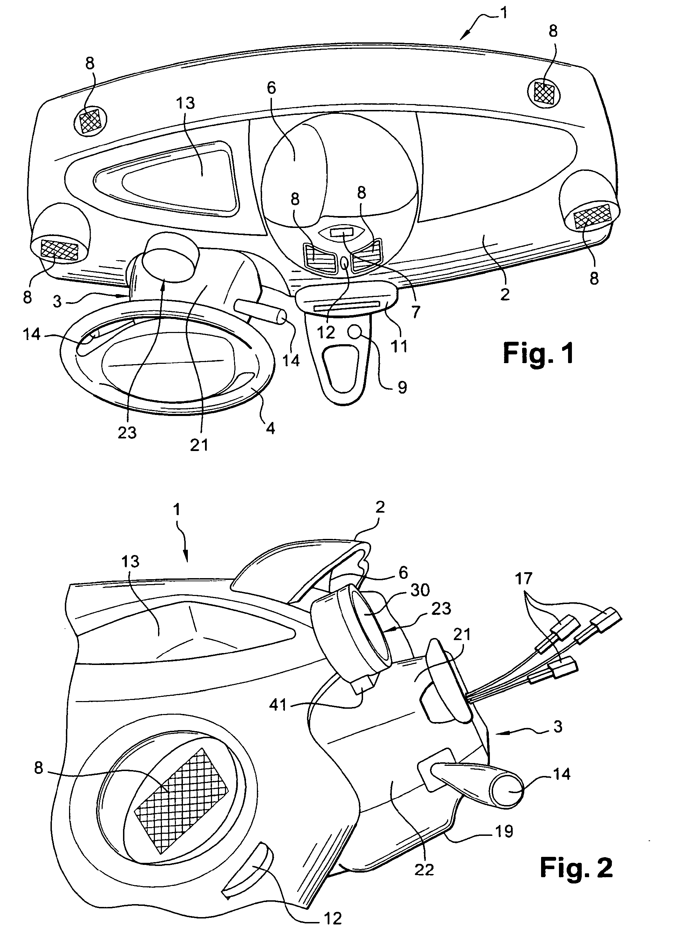

Comme l'illustre les Figures 1 et 2, un poste de pilotage (1), destinée à un véhicule automobile, comprend une planche de bord (2) et un sous-ensemble de poste de pilotage (3), avec son volant de direction (4) fonctionnellement relié à une colonne de direction (5). Dans la description de la présente invention, l'avant est défini comme correspondant au sens d'avancement du véhicule et au conducteur regardant à travers le pare-brise avant et l'arrière est défini comme étant le sens de marche arrière du véhicule.

Différents éléments d'interface sont prévus au niveau de la planche de bord (2). Parmi ces éléments, des dispositifs de visualisation d'informations sont prévus, tels que par exemple, un compteur de vitesse du véhicule (6), une montre (7), etc. Parmi ces éléments, des éléments de confort sont prévus, tels que par exemple, des bouches de ventilation (8), un allume-cigare (9), un autoradio (11), etc. Parmi ces éléments, des organes de sélection du mode de fonctionnement d'un ou plusieurs composants du véhicule sont prévus, tels que par exemple, molette de commande (12) de l'ouverture et de la fermeture des bouches de ventilation (8), etc. Parmi ces éléments, des volumes de rangement sont prévus, tels que par exemple, un creux de stockage (13), etc.

D'autres éléments d'interface sont prévus au niveau du sous-ensemble de poste de pilotage (3). Parmi ces éléments, des actionneurs pour commander un ou plusieurs composants du véhicule sont prévus, tels que par exemple des comodo (14), etc. Les comodo (14) sont disposés à droite et à gauche du sous-ensemble de poste de pilotage (3), au niveau des côtés latéraux.

Le long de son axe longitudinal, la colonne de direction (5) comprend un arbre de direction (16), à l'extrémité duquel est fixé le volant de direction (4). Différents câble et connections (17) sont montées, pour l'actionnement du dispositif de sécurité à coussin d'air, pour l'avertisseur sonore, et éventuellement d'autres dispositifs encore. L'arbre de direction (16) est protégé par un élément de structure interne (18) de colonne de direction (5), mécaniquement relié au reste de la structure du véhicule, de façon à assurer la tenue de la colonne de direction (5). Une enveloppe extérieure formant un habillage (19), par exemple une coque en un matériau polymère, avec une face supérieure (21) et deux faces latérales (22) vient fermer et protéger le volume interne, les pièces mécaniques et électriques constitutives du sous-ensemble de poste de pilotage (3).

Un moyen d'affichage d'informations ou dispositif de visualisation, par exemple un compte-tour (23), est monté au niveau du sous-ensemble de poste de pilotage (3), en faisant sailli à partir de la face supérieure (21) de la coque (19). Le compte-tour (23) comprend des moyens de fixation sous la forme d'une patte (24), traversant une ouverture (26) ménagée dans la face supérieure (21) de la coque (19). Le sous-ensemble de poste de pilotage (3) comprend les moyens de direction (4, 5, 16 et 18), les moyens d'affichage (23) et l'habillage (19).

Le compte-tour (23) comprend un organe interne (27), par exemple une carte électronique et/ou un système à cadran et aiguille, logé dans un boîtier (28). L'organe interne (27) est électriquement connecté par une prise (29) et peut donner ses informations concernant la vitesse de rotation du moteur. Une face arrière (30) du boîtier (28) est transparente pour la visualisation de la vitesse de rotation et est orientée vers l'utilisateur assis sur le siège du conducteur. Un câble connecté à la prise (29) passe par l'ouverture (26) de la coque (19).

La patte de fixation (24) entre en contact avec le dispositif de visualisation (23), en s'étendant à l'intérieur du boîtier (28), à partir d'une face avant (31) du boîtier (28). La patte (24) se poursuit par une portion sensiblement perpendiculaire à la face supérieure (21) de la coque (19). La patte (24) se termine par une portion coudée à angle droit (32). Cette portion (32) vient en appui et se fixer sur une excroissance rigide (33) de la structure interne (18).

Conformément à l'invention, un premier espacement ou écartement (34) est ménagé entre un bord arrière (35) de l'ouverture (26), orienté vers le volant (4), et un bord arrière (36) de la face arrière (30) du boîtier (28). Le bord arrière (35) de l'ouverture (26) rentre à l'intérieur du boîtier (28). De ce fait, le bord arrière (35) de l'ouverture (26) est positionné au dessus et à l'avant du bord arrière (36) de la face arrière (30) du boîtier (28). De cette manière, l'ouverture (26) est coiffée par le boîtier (28) et elle est dissimulée à l'utilisateur assis sur le siège du conducteur, derrière le volant (4).

Pour faciliter le montage en donnant des tolérances, un deuxième espacement ou écartement (37) est prévu d'avance entre le compte-tour (23) et la face supérieure (21) de la coque (19). Plus précisément, cet écartement (37) forme un jeu entre l'organe interne (27) et le bord arrière (35) de l'ouverture (26).

Une zone avant de l'ouverture (26), qui n'est pas bouchée par la base du boîtier (28) du compte-tour (23), est fermée par un cache ou une plaquette (38). Ce cache (38) est monté entre un bord avant (39) de la face avant (31) du boîtier (28) et un rebord avant (40) de l'ouverture (26).

Pour terminer l'agencement esthétique du compte-tour (23), la face supérieure (21) de la coque (19) comprend deux flancs latéraux (41), situés de part et d'autre de l'ouverture (26). Ces flancs (41) remontent en direction du boîtier (28) du compte-tour (23).

## Revendications

1. Sous-ensemble pour véhicule automobile, comprenant :
- un arbre de direction (16), à l'extrémité duquel est solidarisé un volant de direction (4),
- une structure (18) de colonne de direction (5) pour l'arbre de direction (16),
- une enveloppe extérieure (19), une ouverture (26) étant ménagée dans une face supérieure (21) de l'enveloppe extérieure (19), et
- au moins un dispositif de visualisation (23), destiné à l'information des utilisateurs du véhicule, présentant un boîtier (28) solidarisé au dessus de l'ouverture (26), un bord arrière (36) du boîtier (28) étant situé en dessous et à l'arrière d'un rebord arrière (35) de l'ouverture (26), pour dissimuler l'ouverture (26),
**caractérisé en ce que** le dispositif de visualisation (23) est solidarisé à la structure (18) de colonne de direction (5) par des moyens de fixation (24) passant par l'ouverture (26) pour former un jeu (34), ménagé entre le bord arrière (36) du boîtier (28) du dispositif de visualisation (23) et le rebord arrière (35) de l'ouverture (26), de façon à ce que le dispositif de visualisation (23) ne soit pas soumis aux vibrations se répercutant sur l'enveloppe extérieure (19) de la colonne de direction (5).

2. Sous-ensemble selon la revendication 1, **caractérisé en ce que** les moyens de fixation (24) comprennent une patte de fixation sensiblement coudée à angle droit (32), venant en appui contre la structure (18) de colonne de direction (5).

3. Sous-ensemble selon la revendication 1 ou 2, **caractérisé en ce que** les moyens de fixation (24) s'étendent à l'intérieur du boîtier (28).

4. Sous-ensemble selon l'une quelconque des revendications précédentes, **caractérisé en ce que** les moyens de fixation (24) entrent en contact avec une face avant (31) du boîtier (28).

5. Sous-ensemble selon l'une quelconque des revendications précédentes, **caractérisé en ce qu**'un écartement formant un jeu (37) est constitué entre un organe interne (27) du dispositif de visualisation (23) et le rebord arrière (35) de l'ouverture (26).

6. Sous-ensemble selon l'une quelconque des revendications précédentes, **caractérisé en ce qu**'il comprend un cache (38) venant fermer une zone avant de l'ouverture (26).

7. Sous-ensemble selon la revendication 6, **caractérisé en ce que** la zone avant de l'ouverture (26) et le cache (38) sont prévus entre un bord avant (39) du boîtier (28) et un rebord avant (40) de l'ouverture (26).

8. Sous-ensemble selon l'une quelconque des revendications précédentes, **caractérisé en ce que** la face supérieure (21) de l'enveloppe extérieure (19) comprend deux flancs latéraux (41), situés de part et d'autre de l'ouverture (26) et remontant en direction du boîtier (28).

9. Sous-ensemble selon l'une quelconque des revendications précédentes, **caractérisé en ce que** le dispositif de visualisation (23) est un compte-tour.

## Claims

1. Sub-assembly for a motor vehicle, comprising:
- a steering shaft (16), to the end of which is connected a steering wheel (4);
- a structure (18) of a steering column (5) for the steering shaft (16);
- an outer casing (19), an opening (26) being made in an upper face (21) of the outer casing (19); and
- at least one display device (23), designed to inform users of the vehicle, having a unit (28) connected above the opening (26), a rear edge (36) of the unit (28) being located below and behind a rear rim (35) of the opening (26), to hide the opening (26),
**characterized in that** the display device (23) is connected to the structure (18) of a steering column (5) by mounting means (24) passing through the opening (26) to form a clearance (34), made between the rear edge (36) of the unit (28) of the display device (23) and the rear rim (35) of the opening (26), so that the display device (23) is not subject to vibrations reverberating off the outer casing (19) of the steering column (5).

2. Sub-assembly according to Claim 1, **characterized in that** the mounting means (24) comprise a mounting bracket generally angled at right angles (32), bearing on the structure (18) of a steering column (5).

3. Sub-assembly according to Claim 1 or 2, **characterized in that** the mounting means (24) lie inside the unit (28).

4. Sub-assembly according to any one of the preceding claims, **characterized in that** the mounting means (24) come into contact with a front face (31) of the unit (28).

5. Sub-assembly according to any one of the preceding claims, **characterized in that** a gap forming a clearance (37) is constituted between an internal member (27) of the display device (23) and the rear rim (35) of the opening (26).

6. Sub-assembly according to any one of the preceding claims, **characterized in that** it comprises a cover (38) closing a front area of the opening (26).

7. Sub-assembly according to Claim 6, **characterized in that** the front area of the opening (26) and the cover (38) are provided between a front edge (39) of the unit (28) and a front rim (40) of the opening (26).

8. Sub-assembly according to any one of the preceding claims, **characterized in that** the upper face (21) of the outer casing (19) comprises two lateral sides (41), located on either side of the opening (26) and rising in the direction of the unit (28).

9. Sub-assembly according to any one of the preceding claims, **characterized in that** the display device (23) is a tachometer.

## Patentansprüche

1. Untereinheit für ein Kraftfahrzeug, die aufweist:
- eine Lenkspindel (16), mit deren Ende ein Lenkrad (4) fest verbunden ist,
- einen Aufbau (18) einer Lenksäule (5) für die Lenkspindel (16),
- eine Außenhülle (19), wobei eine Öffnung (26) in einer Oberseite (21) der Außenhülle (19) ausgespart ist, und
- mindestens eine Anzeigevorrichtung (23), die zur Information der Benutzer des Fahrzeugs bestimmt ist, mit einem Gehäuse (28), das über der Öffnung (26) befestigt ist, wobei ein hinterer Rand (36) des Gehäuses (28) sich unter und hinter einer hinteren Randleiste (35) der Öffnung (26) befindet, um die Öffnung (26) zu verdecken,
**dadurch gekennzeichnet, dass** die Anzeigevorrichtung (23) über Befestigungsmittel (24) fest mit dem Aufbau (18) der Lenksäule (5) verbunden ist, die durch die Öffnung (26) gehen, um einen Spielraum (34) zu bilden, der zwischen dem hinteren Rand (36) des Gehäuses (28) der Anzeigevorrichtung (23) und der hinteren Randleiste (35) der Öffnung (26) ausgespart ist, damit die Anzeigevorrichtung (23) nicht den Schwingungen ausgesetzt wird, die sich auf die Außenhülle (19) der Lenksäule (5) auswirken.

2. Untereinheit nach Anspruch 1, **dadurch gekennzeichnet, dass** die Befestigungsmittel (24) eine im Wesentlichen im rechten Winkel umgebogene Befestigungslasche (32) aufweisen, die gegen den Aufbau (18) der Lenksäule (5) in Auflage kommt.

3. Untereinheit nach Anspruch 1 oder 2, **dadurch gekennzeichnet, dass** die Befestigungsmittel (24) sich im Inneren des Gehäuses (28) erstrecken.

4. Untereinheit nach einem der vorhergehenden Ansprüche, **dadurch gekennzeichnet, dass** die Befestigungsmittel (24) mit einer Vorderseite (31) des Gehäuses (28) in Kontakt kommen.

5. Untereinheit nach einem der vorhergehenden Ansprüche, **dadurch gekennzeichnet, dass** ein einen Spielraum (37) bildender Spalt zwischen einem inneren Organ (27) der Anzeigevorrichtung (23) und der hinteren Randleiste (35) der Öffnung (26) ausgespart ist.

6. Untereinheit nach einem der vorhergehenden Ansprüche, **dadurch gekennzeichnet, dass** sie eine Abdeckung (38) aufweist, die eine vordere Zone der Öffnung (26) verschließt.

7. Untereinheit nach Anspruch 6, **dadurch gekennzeichnet, dass** die vordere Zone der Öffnung (26) und die Abdeckung (36) zwischen einem vorderen Rand (39) des Gehäuses (28) und einer vorderen Randleiste (40) der Öffnung (26) vorgesehen sind.

8. Untereinheit nach einem der vorhergehenden Ansprüche, **dadurch gekennzeichnet, dass** die Oberseite (21) der Außenhülle (19) zwei Seitenflanken (41) aufweist, die zu beiden Seiten der Öffnung (26) angeordnet sind und in Richtung des Gehäuses (28) hochsteigen.

9. Untereinheit nach einem der vorhergehenden Ansprüche, **dadurch gekennzeichnet, dass** die Anzeigevorrichtung (23) ein Drehzahlmesser ist.
